(19) Europäisches Patentamt
European Patent Office
Office européen des brevets

(11) Veröffentlichungsnummer: **0 126 971**
**A1**

# (12) EUROPÄISCHE PATENTANMELDUNG

(21) Anmeldenummer: **84104610.5**

(22) Anmeldetag: **25.04.84**

(51) Int. Cl.³: **C 08 L 71/04**
C 08 J 3/20, C 08 J 3/00

(30) Priorität: **30.04.83 DE 3315802**

(43) Veröffentlichungstag der Anmeldung:
**05.12.84 Patentblatt 84/49**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Reffert, Rudi Wilhelm**
**Berliner Strasse 18**
**D-6711 Beindersheim(DE)**

(72) Erfinder: **Hambrecht, Juergen, Dr.**
**Werderstrasse 30**
**D-6900 Heidelberg(DE)**

(72) Erfinder: **Echte, Adolf, Dr.**
**Leuschnerstrasse 42**
**D-6700 Ludwigshafen(DE)**

(72) Erfinder: **Heil, Eduard**
**Hardenburgstrasse 4**
**D-6703 Limburgerhof(DE)**

(72) Erfinder: **Siebel, Peter, Dr.**
**Trifelsring 20**
**D-6703 Limburgerhof(DE)**

(72) Erfinder: **Swoboda, Johann, Dr.**
**Neuwiesenstrasse 28**
**D-6700 Ludwigshafen(DE)**

## (54) Verfahren zur Herstellung von Kunststoffadditive enthaltenden Polyphenylenethern und deren Verwendung als Mischungskomponente mit anderen Polymeren.

(57) Die Erfindung betrifft ein Verfahren zur kontinuierlichen Herstellung von hochmolekularen Polyphenylenether enthaltenden Mischungen mit 5 bis 50 Gew.% Kunststoffadditiven, wobei 5 bis 50 gew.%ige Polyphenylenetherlösungen in einem mindestens eine Stufe umfassenden ersten Verdampfungsprozeß auf 60 bis 95 Gew.% Polymerisatgehalt aufkonzentriert werden und dann mit den Kunststoffadditiven unter scherenden Bedingungen vermischt und in einem mindestens eine Stufe umfassenden zweiten Verdampfungsprozeß von Lösungsmittel bis auf einen Restgehalt von weniger als 0, 1 Gew.% befreit werden. Die aufkonzentrierte Polyphenylenetherlösung ist zweckmäßig 120 bis 200°C heiß, das Mischen erfolgt bevorzugt in einem Verdampfungsextruder und beim zweiten Verdampfungsprozeß herrscht zweckmäßig ein Druck von 0, 5 bis 50 mbar und eine Temperatur von 220 bis 280°C. Die mittlere Verweilzeit der Mischungskomponenten in der Mischzone beträgt bevorzugt 1 bis 200 Sekunden.

EP 0 126 971 A1

Croydon Printing Company Ltd.

Verfahren zur Herstellung von Kunststoffadditiven enthaltenden Polyphenylenethern und deren Verwendung als Mischungskomponente mit anderen Polymeren

Die Erfindung betrifft ein Verfahren zur kontinuierlichen Herstellung von Mischungen aus Polyphenylenethern mit Kunststoffadditiven, wobei Lösungen von Polyphenylenethern in organischen Lösungsmitteln mit den Additiven unter Verdampfen des Lösungsmittels vermischt werden.

Bei diesen Mischungen handelt es sich um Additivkonzentrate in Polyphenylenethern.

Es ist bereits bekannt, hochmolekulare Polyphenylenether nach deren Herstellung aus einwertigen Phenolen aus der Reaktionslösung in aromatischen Lösungsmitteln mit Methanol zu fällen und das ausgefällte Polymere abzufiltrieren (vgl. US-PS 3 661 848). Das getrocknete Polymere wird üblicherweise anschließend in einem Extruder mit anderen Polymeren sowie mit Additiven oder Additiven allein abgemischt. Nachteilig bei diesem bekannten Verfahren ist der Einsatz großer Mengen Lösungs- und Fällungsmittel. Außerdem kann durch die hohe Mischungstemperatur von 250 bis 400°C im Extruder, wie sie beispielsweise bei der Abmischung mit organischen Zusatzstoffen, wie Glasfasern oder Pigmenten, auftreten können, eine mechanische und thermische Produktschädigung eintreten. Ein weiterer Nachteil des bekannten Mischverfahrens ist der hohe Energieaufwand bei der Mischung wegen der hohen Erweichungstemperatur der Polyphenylenether.

In der DE-OS 31 31 440 ist ein Verfahren beschrieben, das die Nachteile des bisher bekannten Mischungsverfahrens zur Herstellung von Mischungen aus Polyphenylenether und anderen Polymeren vermeidet, indem Lösungen von Polyphenylenether mit den Polymeren versetzt und die erhaltenen Lösungen in einem Mehrstufenprozeß eingedampft werden. Bei diesem Verfahren werden die Polymeren dem Polyphenylenether in Gegenwart von viel Lösungsmittel beigemischt, so daß man große Mengen lösungsmittelhaltige Mischungen vom Lösungsmittel befreien muß, wobei die Apparatedimensionen vergrößert und die Anlagekosten der Verdampfungsanlagen verteuert werden, insbesondere dann, wenn Polymermischungen mit gleichen oder überwiegenden Mengen Styrolpolymerenanteilen, wie sie vorzugsweise angewendet werden, hergestellt werden sollen. Nach diesem Verfahren ist es aber nicht möglich Polyphenylenether-Additiv-Konzentrate herzustellen, die frei von anderen Polymeren sind.

Der vorliegenden Erfindung lag daher die Aufgabe zugrunde, die oben genannten Nachteile zu vermeiden und ein einfaches und billiges Verfahren
Fre/HB

zur Herstellung von hochkonzentrierten Mischungen aus Polyphenylenethern und Kunststoffadditiven aufzufinden, bei dem die Produktabbauschädigung der Polymerkomponenten wesentlich vermindert ist und der Anfall großer Mengen Lösungsmittel vermieden wird.

Die Aufgabe wurde erfindungsgemäß dadurch gelöst, daß 5 bis 50 gewichtsprozentige Polyphenylenetherlösungen in einem ersten Verdampfungsprozeß auf 60 bis 95 Gew.% Polyphenylenethergehalt aufkonzentriert, dann mit Kunststoffadditiven in eine Mischzone, in der eine Schergeschwindigkeit von 5 bis 400 $sec^{-1}$ herrscht, zugeführt und die Mischungen in einem zweiten Verdampfungsprozeß vom restlichen Lösungsmittel bis auf einen Lösungsmittelgehalt von weniger als 0,1 Gew.% befreit werden.

Nach bevorzugten Verfahrensweisen wird die aufkonzentrierte Polyphenylenetherlösung im 120 bis 200°C heißen Zustand der Mischzone zugeführt. Bevorzugt werden die aufkonzentrierte Polyphenylenetherlösung und die Additive der Mischzone eines Verdampfungsextruders zugeführt. Bevorzugt beträgt die mittlere Verweilzeit der Mischungskomponenten in der Mischzone 1 bis 200 Sekunden. Besonders bevorzugt ist ein Verfahren, bei dem die Schergeschwindigkeit 10 bis 200 $sec^{-1}$ beträgt. Bevorzugt ist auch ein Verfahren, bei dem im zweiten Verdampfungsprozeß ein Druck von 0,5 bis 50 mbar und eine Temperatur zwischen 220 und 280°C herrscht.

Die Polyphenylenether sind Eigenkondensationsprodukte von einwertigen monocyclischen Phenolen, die durch Umsetzung der Phenole mit Sauerstoff in Gegenwart von Katalysatorkomplexen hergestellt werden. Sie weisen Molekulargewichte von 20000 bis 90000, bevorzugt 25000 bis 80000, bestimmt nach der in "Macromoleculares Syntheses" 1 (1978), S. 83 angegebenen Methode, auf. Die hochmolekularen Polyphenylenether, auch Poly(phenylenoxide) genannt, sind aus der Literatur seit längerem bekannt (vgl. z.B. US-Patentschriften 3 561 848, 3 219 625, 3 306 874, 3 306 875 oder 3 378 505), so daß sich eine weitere Beschreibung erübrigt.

Als Lösungsmittel werden bei der Polykondensation Benzol, Toluol, Ethylbenzol, Cumol, Xylol, Methylethylbenzol und andere alkylierte aromatische Kohlenwasserstoffe mit bis zu 12 C-Atomen sowie aliphatische Kohlenwasserstoffe, vorzugsweise $C_6$- bis $C_{10}$-Kohlenwasserstoffe, halogenierte aromatische Kohlenwasserstoffe, wie Chlorbenzol, Dichlorbenzol u.a., Arylalkylether, wie Anisol, p-Methylanisol, Ethylphenylether u.a. sowie aromatische Carbonsäureester, wie Benzoesäuremethylester u.a. eingesetzt. Bevorzugt verwendet werden Toluol, Ethylbenzol, Anisol. Das Mischungsverfahren geht von Lösungen der Polyphenylenether in geeigneten Lösungsmitteln aus. Die Lösung stammt bevorzugt aus dem Herstellprozeß des Polyphenylenethers. Es ist auch möglich, festen Polyphenylenether in obigen Lösungsmitteln zu lösen.

Nach bekanntem Verfahren (vgl. DE-OS 31 31 440) kann das Verdampfen des Lösungsmittels bei Temperaturen zwischen 120 und 280°C und bei Drücken von 1 bis 3000 mbar vorgenommen werden. Es ist auch ein Vorteil, das Verdampfen in Gegenwart von Partialdruck senkenden Hilfsmitteln wie Wasser und/oder Methanol vorzunehmen.

Unter Kunststoffadditiven sollen hier niedermolekulare und/oder oligomere Zusätze und anorganische oder organische, bei Kunststoffverarbeitungstemperaturen nicht schmelzbare Füllstoffe, Pigmente und Verstärkungszusätze verstanden werden. Die niedermolekularen Zusätze können Schmiermittel, Plastifiziermittel, Gleitmittel, Formtrennmittel, Brandschutzmittel, oberflächenaktive Substanzen, Alterungsschutzmittel, Lichtschutzmittel, Stabilisatoren etc. sein.

Als Füllstoffe, Pigmente und Verstärkungszusätze können beispielsweise Glasfasern, Talk, Glimmer, Calciumsilikat, Aluminiumsilikat und Calciumcarbonat, Färbungsmittel, wie Ruß, Phthalocyanin, Chinacridon-, Indolin-, Azopigmente, Titanoxid, Cadmiumpigmente, Gelbblei und rotes Eisenoxid, Quarz, Metallfasern, Wollastonit oder die in der US-PS 4 080 351, Spalten 3 und 4 beschriebenen Füllstoffe eingesetzt werden.

Das mineralische Verstärkungsmittel ist beispielsweise Talkum, Aluminiumsilikat, z.B. Ton, Kaolin, hydratisierter, entwässerter oder kalzinierter Ton, Zinkoxid, Titandioxid, Antimonoxid, Bariumsulfat, gefälltes oder natürliches Calciumcarbonat, Zinksulfid, und ähnliches. Besonders bevorzugt ist hydratisiertes Aluminiumsilikat.

Die Auswahl des Plastifizierungsmittels ist nicht kritisch und es kann jedes herkömmliche für diesen Zweck verwendete Mittel eingesetzt werden. Es handelt sich insbesondere um Phthalat- oder Phosphat-Plastizierungsmittel und insbesondere Phosphat-Plastizierungsmittel. Das Phosphat-Plastizierungsmittel ist vorzugsweise eine Verbindung der Formel

$$OR^3 - \overset{\overset{\displaystyle O}{\|}}{\underset{\underset{\displaystyle OR^2}{|}}{P}} - OR^1$$

worin $R^1$, $R^2$ und $R^3$ gleich oder verschieden sind und Alkyl, Halogenalkyl, Cycloalkyl, Halogencycloalkyl, Aryl, Halogenaryl, alkylsubstituiertes

Aryl, halogenalkyl-substituiertes Aryl, arylsubstituiertes Alkyl, halogenaryl-substituiertes Alkyl, Hydroxyalkyl, Hydroxyaryl, Hydroxyalkaryl, Halogen und Wasserstoff bedeuten.

Als Gleitmittel und Lichtschutzmittel können z.B. eingesetzt werden: Calciumstearat, Zinkstearat, Butylstearat und Ethylenbisstearamid bzw. 2-Hydroxy-4-octoxybenzophenon, 2(2'-Hydroxy-5-methylphenyl)benzotriazol und Ethyl-2-cyan-3,3-diphenylacrylat.

Als oberflächenaktive Substanzen können z.B. eingesetzt werden: Alkalisalze höherer Fettsäuren der Formel RCOOM, worin R eine Alkylgruppe mit 3 bis 40 Kohlenstoffatomen und M ein Alkaliatom bedeuten, Alkylsulfate der Formel $ROSO_3M$, worin R und M die vorstehend angegebenen Bedeutungen besitzen, Alkylsulfonate der Formel $RSO_3M$, worin R und M die vorstehend angegebenen Bedeutungen besitzen, Alkylarylsulfonate der Formel R-Aryl-$SO_3M$, worin R und M die vorstehend angegebenen Bedeutungen besitzen, und Sulfosuccinatestersalze der Formel

$$\begin{array}{c} ROCOCH_2 \\ | \\ ROCOCHSO_3M \end{array}$$

worin R und M die vorstehend angegebenen Bedeutungen besitzen.

Antioxydantien sind z.B. die Verbindungen Di-tert.-butyl-p-cresol, Distearylthiodipropionat und Dilaurylthiodipropionat und Flammschutzmittel z.B. Phosporverbindungen, insbesondere aus der Gruppe der Phosphate, Phosphonate und Phosphinoxide.

Eine umfassende Darstellung der Kunststoffadditive ist in der Druckschrift Gächter/Müller, Kunststoff-Additive, Carl Hanser Verlag München 1979 gegeben.

Es ist vorteilhaft, daß in den Polyphenylenether-Additiv-Konzentraten das Mischungsverhältnis der gesamten Additive zum Polyphenylenether 80:20 bis 5:95, bevorzugt 50:50 bis 20:80 Gewichtsteile beträgt.

Bei dem erfindungsgemäßen ersten Verdampfungsprozeß, bei dem von einer 5 bis 50 gew.%igen Polyphenylenetherlösung, bezogen auf die Lösung, ausgegangen wird, wobei die Lösung bevorzugt aus dem Herstellprozeß des Polyphenylenethers stammt, ist es von Vorteil, wenn der Prozeß einstufig ist und die Polyphenylenetherlösungen in einem Wärmeaustauscher unter Drücken von 10 bis 60 bar (absolut) auf Temperaturen von 220 bis 280°C erhitzt

werden und auf Drücke von 0,5 bis 6,0 bar (absolut) und Temperaturen von 120 bis 200°C unter Verdampfen von Lösungsmitteln in einen Raum entspannt werden und daraus die Lösungsmitteldämpfe und die fließfähigen Polyphenylenether getrennt abgezogen werden. Der erste Verdampfungsprozeß kann auch einstufig in einem zonenweise beheizbaren dynamischen Dünnschichtverdampfer unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden. Der erste Verdampfungsprozeß kann auch einstufig sein und in einem mit einem Temperaturgradienten beheizbaren Röhrenbündelverdampfer, der mit gebohrten Rohrstopfen auf der Eingangsseite oder mit teilweise oder über die ganze Länge gequetschten Rohren für die Gleichverteilung der Produktströme in den Rohren versehen ist und unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden, oder in einem zonenweise beheizbaren Fallfilmverdampfer unter Drücken von 0,5 bis 6,0 bar (absolut) und Temperaturen von 120 bis 200°C durchgeführt werden und die fließfähigen Polyphenylenether und die Lösungsmitteldämpfe in einen Raum gelangen, aus dem sie getrennt abgezogen werden.

Nach erfindungsgemäßem Verfahren wird die auf 60 bis 95 Gew.% aufkonzentrierte Polyphenylenetherlösung, die vorzugsweise 120 bis 200°C heiß ist, mit Kunststoff-Additiven einer Mischzone, in der eine Schergeschwindigkeit von 5 bis 400 $sec^{-1}$, vorzugsweise von 10 bis 200 $sec^{-1}$, herrscht, zugeführt. In dieser Mischzone wird die Polyphenylenetherlösung mit den Additiven in dynamischen Mischern vermischt. Nach bevorzugter Verfahrensweise werden die aufkonzentrierte Polyphenylenetherlösung und die Additive der Mischzone eines Verdampfungsextruders zugeführt. In derartigen Verdampfungsextrudern können Kunststoffe unter gleichzeitiger Entfernung flüchtiger Bestandteile mit Kunststoff-Additiven gemischt werden. Geeignete Mischverfahren in einem Entgasungsextruder sind beispielsweise in der Druckschrift H. Herrmann, Schneckenmaschinen in der Verfahrenstechnik, Springer Verlag, <u>1972</u>, Seiten 149 bis 160, beschrieben. Es können aber auch Verdampfungskneter mit mindestens einer Verdampfungszone zur Anwendung kommen. Bei diesem Mischvorgang kann während der Vermischung, vorzugsweise bei Drücken von 0,5 bis 50 mbar und Temperaturen von 200 bis 280°C, die Mischung von Lösungsmitteln bis auf einen Restgehalt von unter 0,1 Gew.% befreit werden. Nach bevorzugtem Verfahren beträgt die mittlere Verweilzeit der Mischungskomponenten in der Mischzone 1 bis 200, besonders bevorzugt 5 bis 100 Sekunden. Unter mittlerer Verweilzeit wird die Zeit verstanden, welche die Mischung im Mittel in der Mischzone verweilt. Sie ist definiert als das Verhältnis der in der Mischzone befindlichen

Produktmenge zu der je Zeiteinheit in der Mischzone durchgesetzten Produktmenge.

Die erhaltenen Mischungen werden anschließend an den Mischvorgang oder gleichzeitig während der Vermischung in einem zweiten Verdampfungsprozeß, bei dem bevorzugt ein Druck von 0,5 bis 50 mbar und eine Temperatur zwischen 220 und 280°C herrscht, von restlichen Lösungsmitteln bis auf einen Lösungsmittelgehalt von unter 0,1 Gew.%, bezogen auf die Mischung, befreit. Hierzu kann die Mischung in einem Verdampfungsextruder oder Verdampfungskneter mit mindestens einer Verdampfungszone bei Drücken von 0,5 bis 50 mbar und Temperaturen von 200 bis 280°C von Lösungsmitteln bis auf Restgehalte von weniger als 0,1 % befreit werden. Vorteilhaft wird ein Verdampferextruder mit mehr als einer Verdampfungszone verwendet und die letzte Zone bei 0,5 bis 5 mbar betrieben. Vorteilhaft können kleine Mengen Verdampfungshilfsmittel wie Wasser oder Methanol flüssig oder dampfförmig zur Partialdruckabsenkung zugesetzt werden. Aus der letzten Stufe dieses zweiten Verdampfungsprozesses wird die Polymerenmischung als Schmelze in Strangform kontinuierlich ausgetragen, abgekühlt und granuliert. Nach der letzten Verdampfungszone können gegebenenfalls noch weitere, vorzugsweise solche Additive in die Mischung eingebracht werden, die unter den Verdampfungsbedingungen flüchtig sind.

Die flüchtigen Anteile aller Stufen werden getrennt kondensiert und gemeinsam aufgefangen; die gesammelten Kondensate werden über eine gemeinsame Leitung einer Destilliereinrichtung zugeführt, in der schwerflüchtige Verunreinigungen und gegebenenfalls die Verdampfungshilfen abgetrennt werden.

Das erfindungsgemäße Verfahren erlaubt es unter schonenden Bedingungen hochkonzentrierte Mischungen aus Polyphenylenethern und Kunststoff-Additiven herzustellen. Die bei den bisherigen Verfahren auftretende z.T. starke Produktschädigung bei der Herstellung dieser Mischungen wird wesentlich vermindert bzw. völlig unterdrückt. Die aus Abmischungen der Additiv-Konzentrate in Polyphenylenether mit anderen Polymeren resultierenden Polymermischungen besitzen dementsprechend eine erhöhte Wärmeformbeständigkeit, geringere Eigenfarbe und ein höheres Zähigkeitsniveau.

Unter anderen als Mischungskomponenten geeigneten Polymeren werden alle organischen Polymeren verstanden, die mit Polyphenylenether mischbar sind und die in den Polyphenylenether eingebracht werden können. Besonders geeignet sind die Homo- und Copolymere des Styrols und/oder seiner Homologen, die vorzugsweise mit Kautschuk modifiziert sein können. In den Copolymeren verwendet man im allgemeinen Acrylsäure oder Methacrylsäure

oder ihre Derivate wie (Meth-)acrylsäureester, (Meth-)acrylamide oder (Meth-)acrylnitril, auch Maleinsäureanhydrid und die Ester der Maleinsäure, der Fumarsäure oder Itaconsäure sind einsetzbar. Unter Homologen des Styrols versteht man im engeren Sinn die im Kern oder der Seitenkette alkylierten Substitutionsprodukte, besonders p-Methylstyrol, m-Methylstyrol, o-Methylstyrol und ihre Mischungen, -Methylstyrol, mehrfach alkylierte Styrole wie 2,4-Dimethylstyrol und Styrole mit höheren Alkylsubstituenten, wie tert.-Butylstyrol oder Vinyltetralin und solche mit Arylsubstituenten wie Phenylstyrol oder Vinylnaphthalin. Aber auch andere Substitutionsprodukte des Styrols sind im weiteren Sinn als Homologe des Styrols zu betrachten, wie die im Kern halogenierten, acylierten oder anderseitig substituierten Styrole. Diese Homologen können auch als Comonomere des Styrols verwendet werden. Zur Schlagfestmodifizierung der Polystyrole können in bekannter Weise z.B. Polybutadien, Styrol-Butadien-Kautschuk, Polyisopren, Polyacrylate, Ethylen-Vinylacetat-Copolymere, Polyisobutylen oder EPDM-Kautschuke eingesetzt werden. Es ist üblich, daß das Mischungsverhältnis der anderen Polymeren zum Polyphenylenether 99:1 bis 1:99 Gew.-Teile beträgt.

Das erfindungsgemäße Verfahren wird an den folgenden Beispielen erläutert. Zur Prüfung der Produkte wurden folgende Produktkenndaten ermittelt: Die Kerbschlagzähigkeit ($A_k$) in $kJ/m^2$ und das Elastizitätsmodul (E-Modul) in $N/mm^2$ der Produkte wurde nach ISO 179 und ISO 527 an bei 280°C gespritzten Probekörpern bei einer Prüftemperatur von 23°C gemessen. Die Wärmeformbeständigkeit wurde anhand des Vicat-Erweichungspunktes in °C nach ISO 306 in Silikonöl bestimmt. Die Farbe von Preßkörpern wurde in Anlehnung an eine Jod-Jodkalium-Farbskala (DIN 6162) ermittelt.

Beispiel 1

Eine 10 gew.%ige Lösung von Poly-(2,6-dimethylphenylenether-1,4), im weiteren PPE genannt, mit der Grenzviskosität [ ] = 0,60 dl/g (Chloroform, 25°C) in Toluol, die noch aus dem Herstellungsprozeß 0,3 mg/kg Cu und 0,53 % Di-n-butylamin enthält, wird bei 70°C kontinuierlich mit 8,15 kg/h unter einem Druck von 25 bar in einem beheizten Wärmeaustauschrohr auf 255°C erhitzt und in einem Sammelraum von 10 Liter auf einen Druck von 1,5 bar (absolut) und 152°C entspannt. Aus dem Sammelraum werden 7,0 kg/h Lösungsmitteldämpfe und 1,14 kg/h 71,5 gew.%ige PPE-Lösung getrennt entnommen. Der Toluoldampf wird auf Atmosphären-druck entspannt und kondensiert; das Kondensat enthält 0,50 Gew.% Di-n-butylamin. Die PPE-Lösung wird mit einer Zahnradpumpe kontinuierlich einem Verdampfungsextruder, der mit zwei bei 20 mbar betriebenen Verdampfungszonen und stromaufwärts mit zwei Einspeiseöffnungen ausgestattet ist, zugeführt. Der Extruder

besitzt gleichsinnig drehende, dichtkämmende Schneckenwellen von 28 mm Durchmesser und wird mit 80 Upm betrieben und auf 270°C beheizt. Aus den beiden Verdampfungszonen werden 0,335 kg/h Lösungsmitteldämpfe abgezogen und kondensiert. Dem Extruder wird über die zweite Einspeiseöffnung jeweils 0,349 kg/h Additiv der Mischungen 1A und 1B mittels einer Kolbendosierpumpe zugeführt. Die Polyphenylenether-Additiv-Konzentrate werden aus dem Extruder als Schmelzenstränge ausgetragen, abgekühlt und granuliert. Die Zusammensetzungen der Additiv-Mischungen A und B sind in der Tabelle 1 angegeben.

Tabelle 1

| Mischung<br>Additive | 1A<br>Gew.-Teile | 1B<br>Gew.-Teile |
|---|---|---|
| Triphenylphosphat | 14 | 12 |
| Trisnonylphenylphosphit | 2 | 2 |
| Titandioxid | 1,5 | 6 |
| AL-Silikat | 12 | - |
| Irganox 1076[R] | 0,2 | - |
| Zinkoxid | 0,2 | - |
| Silikonöl | 0,1 | - |
| oligomeres Styrol (MG=1100 g/Mol) | - | 10 |

Die PPE-Konzentrate der Additive 1A und 1B wurden geprüft und die Meßwerte in der Tabelle 2 gefunden. Zum Vergleich wurden die gleichen Konzentrate aus PPE-Pulver, das durch Fällung und Trocknung erhalten wurde, mit den gleichen Additiv-Mischungen A und B durch Extrusionsmischung hergestellt; die Prüfwerte sind in der Tabelle 2 aufgeführt.

Irganox 1076[R] ist ein Stabilisator der Fa. Ciba Geigy [Octadecyl-3-(3',5'-di-tert.-butyl-4'-hydroxiphenyl-)propionat]

Tabelle 2

| Additiv-Konzentrat | | PPE Gew.% | Vicat-Temp. | $A_k$ | E-Modul | Farbe mg Jod/l |
|---|---|---|---|---|---|---|
| Beispiel 1A | | 70 | 109 | 7,9 | 3600 | ca. 130 |
| Beispiel 1B | | 70 | 128 | 8,1 | 3100 | ca. 120 |
| Vergleichsbeispiel | 1A' | 70 | 97 | 6,0 | 3500 | ca. 300 |
| Vergleichsbeispiel | 1B' | 70 | 112 | 6,9 | 2900 | ca. 300 |
| (nicht erfindungsgemäß) | | | | | | |

Die Vorteile der erfindungsgemäß hergestellten PPE-Additiv-Konzentrate zeigen sich an den optimalen Werten, insbesondere der Vicat-Temperatur und der Farbe, und finden sich auch in den Werten der Verschnittprodukte mit Polystyrol.

Beispiel 2

Um die Additiv-Konzentrate als Polystyrolverschnitte bzw. deren Eigenschaften zu prüfen, wurde ein schlagzähes Polystyrol hergestellt.

In einem Rührkessel von 4 Liter Inhalt mit Blattrührer wird eine Lösung, bestehend aus 1283 g Styrol, 112 g Polybutadien (1,2-Vinylgehalt ca. 9 Gew.%), 1,5 g t-Dodecylmercaptan, 1,5 g Octadecyl-3(3',5'-di-tert.--butyl-4'-hydroxiphenyl)-propionat und 1,5 g Dicumylperoxid bei 110°C Innentemperatur und einer Rührerdrehzahl von 350 Upm bis zu einem Feststoffgehalt von 25,4 Gew.% vorpolymerisiert. Anschließend werden 1800 ml Wasser, die 9 g Polyvinylpyrrolidon vom K-Wert 90 und 1,8 g $Na_4P_2O_7$ enthalten, zugesetzt und die Rührerdrehzahl auf 300 Upm erniedrigt. Durch Nachpolymerisation von 3 Stunden bei 110°C, 3 Stunden bei 120°C und 4 Stunden bei 140°C polymerisiert man bis zu einem Styrolumsatz größer als 99 Gew.% aus.

Das schlagzähe Polystyrol (HIPS) besitzt eine mittlere Polybutadien-Teilchengröße von 1,5µm.

Die Additiv-Konzentrate des Beispiels 1A, 1B und des Vergleichsbeispiels 1A' und 1B' wurden mit dem HIPS durch Extrusionsabmischung jeweils auf 25 Gew.% und 45 Gew.% PPE verdünnt. Die ermittelten Eigenschaften sind in der Tabelle 3 zusammengestellt.

Tabelle 3

| Additiv-Konzentrat | HIPS-Verschnitt | | | |
|---|---|---|---|---|
| | Gew.% PPE | Vicat-Temp. | $A_k$ | Farbe |
| Beispiel 1A | 25 | 105 | 8,4 | 40 |
| 1A | 45 | 104 | 8,7 | 70 |
| Beispiel 1A' | 25 | 99 | 6,2 | 160 |
| 1A' (nicht erfindungsgemäß) | 45 | 98 | 5,9 | 200 |

Patentansprüche

1. Verfahren zur kontinuierlichen Herstellung von Mischungen aus Polyphenylenethern mit Kunststoffadditiven, wobei Lösungen von Polyphenylenethern in organischen Lösungsmitteln mit den Additiven unter Verdampfen des Lösungsmittels vermischt werden, dadurch gekennzeichnet, daß 5 bis 50 gew.%ige Polyphenylenetherlösungen in einem ersten Verdampfungsprozeß auf 60 bis 95 Gew.% Polyphenylenethergehalt aufkonzentriert, dann mit den Kunststoffadditiven einer Mischzone, in der eine Schergeschwindigkeit von 5 bis 400 $sec^{-1}$ herrscht, zugeführt und die Mischungen in einem zweiten Verdampfungsprozeß von restlichen Lösungsmitteln bis auf einen Lösungsmittelgehalt von unter 0,1 Gew.% befreit werden.

2. Verfahren nach Anspruch 1, dadurch gekennzeichnet, daß die aufkonzentrierte Polyphenylenetherlösung im 120 bis 200°C heißen Zustand der Mischzone zugeführt wird.

3. Verfahren nach Anspruch 1, dadurch gekennzeichnet, daß die aufkonzentrierte Polyphenylenetherlösung und die Additive der Mischzone eines Verdampfungsextruders zugeführt werden.

4. Verfahren nach Anspruch 1, dadurch gekennzeichnet, daß die mittlere Verweilzeit der Mischungskomponenten in der Mischzone 1 bis 200 Sekunden beträgt.

5. Verfahren nach Anspruch 1, dadurch gekennzeichnet, daß die Schergeschwindigkeit 10 bis 200 $sec^{-1}$ beträgt.

6. Verfahren nach Anspruch 1, dadurch gekennzeichnet, daß beim zweiten Verdampfungsprozeß ein Druck von 0,5 bis 50 mbar und eine Temperatur zwischen 220 und 280°C herrscht.

7. Verwendung der nach Anspruch 1 erhaltenen Mischungen aus Polyphenylenethern mit 5 bis 50 Gew.% Kunststoffadditiven als Mischungskomponente mit anderen Polymeren.

Europäisches Patentamt

**0126971**
Nummer der Anmeldung

# EUROPÄISCHER RECHERCHENBERICHT

EP 84 10 4610

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 153 639 (H.A. VAUGHN) * Spalte 1, Zeilen 12-51; Anspruch 1 * | 1 | C 08 L 71/04<br>C 08 J 3/20<br>C 08 J 3/00 |
| A | US-A-4 283 503 (R.F. WRIGHT) * Spalte 6, Zeile 30 - Spalte 7, Zeile 53; Anspruch 1 * | 1,7 | |
| A | EP-A-0 071 093 (BASF AG) * Seite 7, Zeile 21 - Seite 8, Zeile 27; Ansprüche 1, 6 * & DE-A-3 131 440 (Kat. D, A) | 1,6 | |
| | | | **RECHERCHIERTE SACHGEBIETE (Int. Cl. 3)** |
| | | | C 08 J 3/00<br>C 08 L 71/04 |

Der vorliegende Recherchenbericht wurde für alle Patentansprüche erstellt.

| Recherchenort | Abschlußdatum der Recherche | Prüfer |
|---|---|---|
| BERLIN | 12-07-1984 | IDEZ C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82